# EUROPÄISCHE PATENTANMELDUNG

(11) **EP 2 270 079 A1**
(43) Veröffentlichungstag der Anmeldung: **05.01.2011**
(21) Anmeldenummer: 09008741.2
(22) Anmeldetag: 03.07.2009
(51) Int. Cl.: C08J 7/04, B05C 17/02, B25G 1/00

(54) **Strukturbauteil mit einer TPE-Komponente sowie Verfahren zur Herstellung desselben**

(71) Anmelder: Braun GmbH, 61476 Kronberg (DE)
(72) Erfinder: Baier, Florian, 60489 Frankfurt/Main (DE); Heckenthaler, Roland, 55288 Gabsheim (DE)

(57) **Zusammenfassung**

Bereitgestellt wird ein Produkt des persönlichen Bedarfs, dessen Oberfläche teilweise aus einem Kunststoff aus der Gruppe der thermoplastischen Elastomere besteht, wobei die Oberfläche des Kunststoffes zumindest teilweise mit einer Schutzschicht aus Lack überzogen ist, welcher direkt auf die Oberfläche des Kunststoffes aufgebracht ist. Der Lack kann einen 2-Komponenten-Klarlack auf Polyurethan-Basis sein, wobei die erste Komponente des 2-Komponenten-Klarlacks aus der Gruppe bestehend aus hydroxylgruppenhaltiges Polyurethanharz, hydroxylgruppenhaltiges Polyester und Polyacrylat ausgewählt ist und mit einem Härter aus der Gruppe der Polyisocyanate zu einem duroplastischen Polyurethan vernetzt. Bereitgestellt wird auch ein Verfahren zur Herstellung eines zumindest teilweise mit einer Schutzschicht versehenen Kunststoffgegenstandes, wobei der Kunststoff aus der Gruppe der thermoplastischen Elastomere ausgewählt ist.

## Beschreibung

### Gebiet der Erfindung

Die Erfindung bezieht sich auf ein Strukturbauteil, das als solches Bestandteil eines Gebrauchsartikels darstellt und zumindest abschnittsweise aus einem Kunststoff aus der Gruppe der thermoplastischen Elastomere besteht. Die Erfindung bezieht sich auch auf ein Verfahren zur Herstellung eines Kunststoffbauteiles, wobei der Kunststoff aus der Gruppe der thermoplastischen Elastomere ausgewählt ist. Die Erfindung bezieht sich auch auf ein bei der Fertigung dieses Bauteils eingesetztes Dispositionsmedium.

### Stand der Technik

Produkte des persönlichen Bedarfs, insbesondere Produkte bzw. Gegenstände zur Körperpflege wie Zahnbürsten, Rasierapparate oder Aufsätze für elektrische Zahnbürsten weisen trendgemäß Oberflächen auf, welche teilweise aus thermoplastischen Elastomeren (auch TPE genannt) bestehen oder teilweise mit thermoplastischen Elastomeren versehen sind, um einerseits die Haptik des Gegenstandes zu verbessern und anderseits eine verbesserte Anti-Rutscheigenschaft beim Gebrauch des Gegenstandes zu gewährleisten. Gegenstände, deren Oberfläche teilweise aus einem thermoplastischen Elastomer besteht, weisen jedoch den Nachteil auf, dass aufgrund der Materialeigenschaften der thermoplastischen Elastomere diese Bereiche der Oberfläche im Laufe einer Benutzung leicht verschmutzen. Diese sichtbare Verschmutzung dieser Oberfläche tritt besonders bei Gegenständen auf, welche als Ausstellungsmuster in einem Laden ausgestellt werden. Hierbei besteht das Problem, dass durch häufiges Aufgreifen des Gegenstands die optische Erscheinung beeinträchtigt wird.

Gegenstände, insbesondere Präsentationsgegenstände für die innere Warenauslage, werden zum Schutz vor Verunreinigungen in eine Schutzfolie eingeschrumpft. Das Einschrumpfen in eine Schutzfolie schützt zwar den Gegenstand vor Verunreinigungen, hat aber den Nachteil, dass die Schutzfolie die Optik und die Haptik des Gerätes stark verändert.

Des Weiteren besteht der Wunsch, Oberflächen aus thermoplastischen Elastomeren zu bedrucken, um etwa Hinweise oder Symbole aufzubringen. Mit den aus dem Stand der Technik bekannten Druckverfahren muss die zu bedruckende Oberfläche zum Teil aufwändig vorbehandelt werden, um einen permanenten Aufdruck zu erzeugen.

### Aufgabe der Erfindung

Der Erfindung liegt die Aufgabe zugrunde, Gegenstände, insbesondere Produkte des persönlichen Bedarfs bereitzustellen, bei welchen zumindest ein Bereich der Oberfläche aus einem thermoplastischen Elastomer besteht, wobei die Oberfläche des thermoplastischen Elastomers sicher vor Verunreinigungen geschützt ist, ohne dabei die Haptik, die Optik und/oder die Anti-Rutscheigenschaften des thermoplastischen Elastomers wesentlich zu beeinträchtigen.

### Erfindungsgemäße Lösung

Diese Aufgabe wird erfindungsgemäß gelöst durch ein Strukturbauteil mit wenigstens einem zum manuellen Aufgriff vorgesehenen Bauteilabschnitt, welcher aus einem Kunststoff aus der Gruppe der thermoplastischen Elastomere (TPE) gefertigt ist, wobei die Oberfläche des Kunststoffes zumindest teilweise mit einer Schutzschicht aus einem Lack versehen ist, welcher direkt auf die Oberfläche des thermoplastischen Elastomers aufgetragen ist. Der Lack verhindert in vorteilhafter Weise ein Anhaften von Schmutz an der Oberfläche des thermoplastischen Elastomers.

Bevorzugt ist der Lack ein Mehrkomponentenklarlack, insbesondere ein 2-Komponenten-Klarlack auf Polyurethan-Basis.

Die erste Komponente des Mehrkomponentenklarlacks kann aus der Gruppe umfassen hydroxylgruppenhaltiges Polyurethanharz, hydroxylgruppenhaltiges Polyester und Polyacrylat ausgewählt sein und mit einem Härter als zweite Komponente aus der Gruppe der Polyisocyanate zu einem duroplastischen Polyurethan vernetzen. Dadurch wird eine besonders gute Haftung des Lackes an der Oberfläche des thermoplastischen Elastomers erreicht, ohne die Oberfläche vor Auftragen des Lackes gesondert vorbereiten zu müssen. Der vorzugsweise 2-Komponenten-Klarlack kann Farbpigmente aufweisen. Thermoplastische Elastomere mit farbigen Schutzschichten können auf diesem Wege hergestellt werden.

In einer Ausführungsform der Erfindung kann der 2-Komponenten-Klarlack hochviskos ausgeführt sein. Dadurch kann der 2-Komponenten-Klarlack auch mittels Druckverfahren oder dergleichen aufgebracht werden. Weist der Lack Farbpigmente auf, lassen sich in vorteilhafter Weise auch thermoplastische Elastomere mit bedruckten Oberflächen herstellen, ohne die Oberfläche vorher aufwändig vorbehandeln zu müssen. Die bedruckte Oberfläche erfüllt gleichzeitig auch die Schutzfunktion des Schutzlackes.

Die Dicke der Schutzschicht wird vorzugsweise so gewählt, dass die Anti-Rutscheigenschaften des Kunststoffes im Wesentlichen nicht beeinträchtigt werden.

Das Strukturbauteil kann ein Produkt des persönlichen Bedarfs sein, etwa ein Produkt oder ein Gerät zur Körperpflege, wie eine manuelle Zahnbürste, eine elektrische Zahnbürste, ein Zungenreiniger-Aufsatz, ein Rasierer, ein elektrisches Rasiergerät oder dergleichen.

Die Oberfläche des Zahnbürstenhalses und/oder des Zahnbürstenkopfes und/oder des Zahnbürstengriffes einer Zahnbürste kann zumindest einen Bereich aus einem Kunststoff aus der Gruppe der thermoplastischen Elastomere (TPE) aufweisen, wobei die Oberfläche des Kunststoffes zumindest teilweise mit einer Schutzschicht aus einem Lack überzogen ist.

Des Weiteren wird ein Verfahren zur Herstellung eines beschichteten Bauteils bereitgestellt, wobei das Bauteil aus einem Kunststoff aus der Gruppe der thermoplastischen Elastomere hergestellt ist, wobei die Oberfläche des Bauteils zumindest teilweise mit einer Schutzschicht aus einem Lack versehen wird und wobei der Lack im Rahmen eines einem Bauteil-Herstellungsschrittes direkt nachfolgenden Beschichtungsschrittes auf die Oberfläche des Bauteils aufgetragen wird. Der Lack wird also direkt auf die Oberfläche des Bauteils aufgetragen wird. Ein direktes Auftragen des Lackes auf die Oberfläche des Bauteils bedeutet, dass der Lack auf die Oberfläche des Bauteils aufgetragen wird, ohne das Bauteil bzw. die Oberfläche des Bauteils vorbehandeln zu müssen, etwa durch Aufbringen einer Grundierung.

Der Lack kann hierbei ein oben beschriebener 2-Komponenten-Klarlack sein. Der 2-Komponenten-Klarlack kann Farbpigmente aufweisen bzw. mit Farbpigmenten versetzt werden und/oder hochviskos ausgeführt werden.

Das Auftragen der Schutzschicht kann im Sprühverfahren, im Tampondruckverfahren, im Siebdruckverfahren oder im Flexodruckverfahren erfolgen. Im Sprühverfahren lassen sich vorteilhafterweise großflächige Bereiche einer TPE-Oberfläche mit einem Lack versehen. Das Tamponverfahren wird vorteilhafterweise zum Bedrucken, z.B. mit einem 2-Komponenten-Klarlack mit Farbpigmenten verwendet.

Das Verfahren kann auch einen Schritt zum Anbringen einer Maskierung auf der TPE-Oberfläche aufweisen, wobei dieser Schritt vor dem Aufbringen der Schutzschicht ausgeführt wird. Die nicht mit einer Schutzschicht zu versehenden Bereiche der Oberfläche des Bauteils bzw. des thermoplastischen Elastomers können mittels der Maskierung von dem Auftragen der Schutzschicht ausgenommen werden.

Bereitgestellt wird auch ein Lack, welcher ein 2-Komponeten-Klarlack auf Polyurethan-Basis ist, wobei die erste Komponente des 2-Komponenten-Klarlacks aus der Gruppe umfassend hydroxylgruppenhaltiges Polyurethanharz, hydroxylgruppenhaltiges Polyester und Polyacrylat ausgewählt ist und mit einem Härter aus der Gruppe der Polyisocyanate zu einem duroplastischen Polyurethan vernetzt. Der 2-Komponenten-Klarlack kann Farbpigmente enthalten und/oder hochviskos ausgeführt sein.

Weitere Vorteile und vorteilhafte Ausgestaltungen der Erfindung sind der Beschreibung, der Zeichnung und den Patentansprüchen entnehmbar.

### Kurzbeschreibung der Figuren

Ausführungsbeispiele der Erfindung sind in der Zeichnung schematisch vereinfacht dargestellt und werden in der nachfolgenden Beschreibung näher erläutert. Es zeigt:
- Fig. 1: verschiedene Gegenstände bzw. Geräte zur Körperpflege, welche teilweise eine Oberfläche aus einem thermoplastischen Elastomer ausweisen, welches mit einer Schutzschicht versehen ist; und
- Fig. 2: eine Schnittansicht einer Wandung eines Gerätegehäuses, dessen äußere Oberfläche teilweise ein thermoplastisches Elastomer aufweist, welches teilweise mit einer Schutzschicht versehen ist.

### Detaillierte Beschreibung der Erfindung

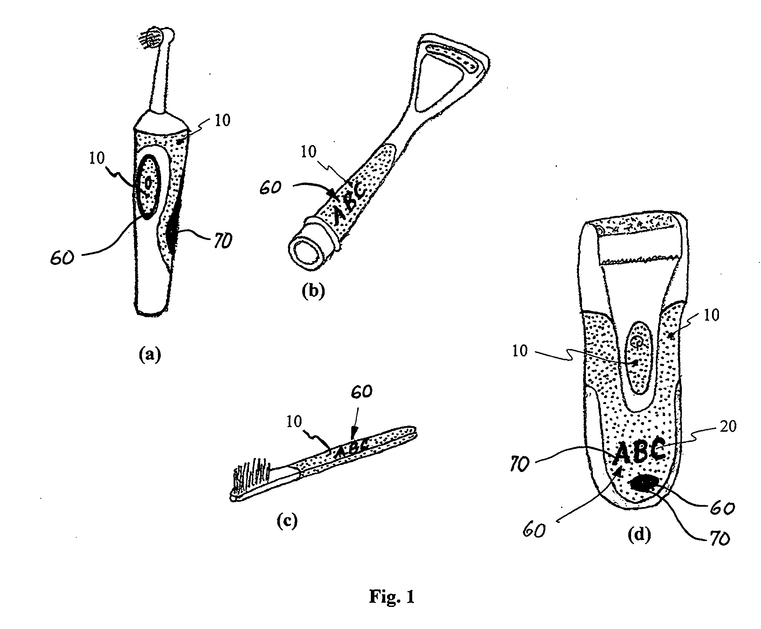

**Fig. 1** zeigt verschiedene Gegenstände zur Körperpflege, etwa eine elektrische Zahnbürste (a), ein Zungenreiniger-Aufsatz (b), eine manuelle Zahnbürste (c) und einen elektrischen Rasierapparat (d). Diese Gegenstände weisen eine Oberfläche auf, welche teilweise mit einem Kunststoff versehen ist bzw. teilweise aus einem Kunststoff besteht. Der Kunststoff ist dabei ein Kunststoff aus der Gruppe der thermoplastischen Elastomere (TPE). Die so gebildeten Oberflächen der Gegenstände sind in Fig. 1 durch die gepunkteten Flächen dargestellt. Die nicht mit dem thermoplastischen Elastomer versehene Oberfläche kann etwa aus einem Hartkunststoff (wie z. B. PP, PE oder POM), einem Metall oder dergleichen sein. Das Körperpflegeprodukt kann im Mehrkomponentenspritzverfahren (Hart/Weich) hergestellt werden.

Die aus einem thermoplastischen Elastomer gebildeten Oberflächen haben in erster Linie die Aufgabe, eine haptisch angenehme und gleichzeitig Rutsch hemmende Oberfläche bereitzustellen. Vorzugsweise werden jene Bereich der Oberfläche eines Gegenstandes mit einem thermoplastischen Elastomer versehen, welche vom Benutzer bei Gebrauch des Gegenstandes berührt werden, um den Gegenstand sicher zu greifen und zu halten.

Aufgrund der elastischen Eigenschaften der thermoplastischen Elastomere kann sich eine mit einem thermoplastischen Elastomer überzogene Oberfläche auch über bewegliche Teile eines Gerätes, etwa über einen Schalter zum Ein- und Ausschalten des Gerätes erstrecken. Der Schalter kann durch die Oberfläche hindurch betätigt werden.

Um die Oberflächen des thermoplastischen Elastomers, insbesondere die sichtbaren Oberflächen, vor Verunreinigungen zu schützen, wird eine Schutzschicht 10 aus einem Lack auf die Oberfläche des thermoplastischen Elastomers aufgetragen. Der Lack ist hier ein 2-Komponenten-Klarlack auf Polyurethan-Basis, so dass die unterhalb des Lacks liegende Oberfläche des thermoplastischen Elastomers noch erkennbar ist.

Der Lack bzw. der 2-Komponenten-Klarlack kann auch mit Farbpigmenten versehen werden. Damit kann der Lack gleichzeitig auch dazu genutzt werden beispielsweise Hinweise 20 oder Symbole auf die Oberfläche des thermoplastischen Elastomers aufzubringen oder die Oberfläche zumindest teilweise mit einer farbigen Schutzschicht zu versehen.

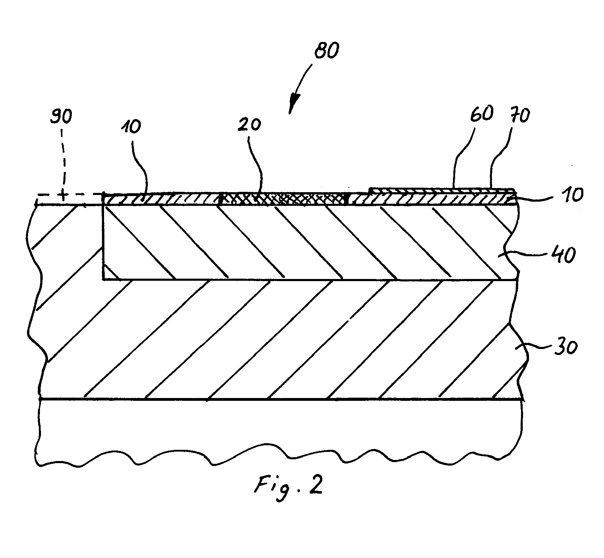

**Fig. 2** zeigt eine Wandung 30 eines Gerätegehäuses in einer Schnittansicht, wobei die äußere Oberfläche bzw. die Außenseite 80 des Gehäuses ganz oder teilweise ein thermoplastisches Elastomer 40 aufweist, welches ganz oder teilweise mit einer Schutzschicht 10 versehen ist.

Auf die Oberfläche einer Gerätewandung 30, welche beispielsweise aus einem Hartkunststoff besteht, ist ein thermoplastisches Elastomer 40 aufgebracht. Dicke und Form des thermoplastischen Elastomers sind dabei im Wesentlichen abhängig von der zu erfüllenden Funktion. Bewegliche Bereiche der Oberfläche oder Bereich, welcher einer hohen Beanspruchung unterliegen, können mit einer Wesentlich dickeren Schicht eines thermoplastischen Elastomers versehen werden.

Wie in Fig. 2 ersichtlich, ist das thermoplastische Elastomer 40 in die Gerätewandung 30 eingelassen, sodass sich eine im Wesentlichen bündige Oberfläche zwischen dem thermoplastischen Elastomer 40 und der Gerätewandung 30 ergibt. Selbstverständlich kann das thermoplastische Elastomer auch ohne bündigen Abschluss zur Gerätewandung 30 auf die Gerätewandung 30 aufgebracht werden.

Die Oberfläche 50 des thermoplastischen Elastomers 40 ist entweder ganz oder teilweise mit einem Schutzlack 10 überzogen, welcher hier ein 2-Komponenten-Klarlack auf Polyurethan-Basis ist. Der 2-Komponenten-Klarlack kann direkt auf die Oberfläche des thermoplastischen Elastomers 40 aufgetragen, ohne die Oberfläche vorbehandeln zu müssen. Nach dem Auftragen des Schutzlackes 10 bildet sich eine Schutzschicht 10 aus und verhindert somit das Anhaften von Schmutz auf der Oberfläche des thermoplastischen Elastomers.

Der Schutzlack 10 kann hierbei direkt auf die Oberfläche des thermoplastischen Elastomers 40 aufgebracht werden, ohne dass vorher eine Vorbehandlung, etwa ein Aufbringen einer Grundierung, der Oberfläche des thermoplastischen Elastomers 40 notwendig ist. Damit kann der Herstellungsprozess beschichteter Bauteile aus thermoplastischen Elastomeren erheblich beschleunigt werden.

Abhängig von den mechanischen Anforderungen an die Schutzschicht, z.B. bei Bereichen, welche häufig berührt werden oder bei beweglichen Bereichen, bei denen das thermoplastische Elastomer häufig einer mechanischen Verformung unterliegt (z.B. bei darunterliegenden Schaltern), kann die Schichtdicke des aufgetragenen Schutzlackes von wenigen µm bis mehreren mm reichen.

Die erste Komponente des 2-Komponenten-Klarlacks wird aus der Gruppe bestehend aus hydroxylgruppenhaltiges Polyurethanharz, hydroxylgruppenhaltiges Polyester und Polyacrylat ausgewählt und vernetzt mit einem Härter aus der Gruppe der Polyisocyanate zu einem duroplastischen Polyurethan. Damit wird eine zuverlässige Haftung des 2-Komponenten-Klarlacks auf dem thermoplastischen Elastomer gewährleistet. Eine besonders gute Haftung wird mit einem 2-Komponenten-Klarlack mit Isocyanat erreicht.

Dem 2-Komponenten-Klarlack kann vor dem Auftragen auch ein Verdünner zugegeben werden.

Durch die Verwendung des 2-Komponenten-Klarlacks werden die Optik und die Haptik des thermoplastischen Elastomers nur unwesentlich verändert. Die Anti-Rutscheigenschaft des Elastomers bleibt im Wesentlichen vorhanden.

Durch die Beschichtung wird die Oberfläche des thermoplastischen Elastomers hydrophobiert, d.h. es bildet sich eine wasserabweisende Oberfläche aus, sodass Wasser darauf abperlt. Weiterhin wird durch den sich duroplastisch ausbildenden (chemisch vernetzten) Schutzlack das Substrat bzw. die Oberfläche des Elastomers geschützt. Gerade matte und/oder rauhe Oberflächen thermoplastischer Elastomere sind anfällig für Schmutzablagerungen. Ein matter Schutzlack mit der genannten Zusammensetzung vermindert die Schmutzaufnahme durch die Barrierewirkung (mechanisch und chemisch) deutlich, was besonders vorteilhaft hinsichtlich der Hygiene des Pflegeproduktes ist.

Dem Lack bzw. dem 2-Komponenten-Klarlack können auch Farbpigmente zugegeben werden. Damit können auch farbige Schutzlacke auf die Elastomeroberfläche aufgebracht werden. Ein Bereich mit Farbpigmenten versetzter 2-Komponenten-Klarlack ist in Fig. 2 mit dem Bezugszeichen 20 gezeigt.

Durch Hinzugabe von Farbpigmenten können auch Symbole, Hinweise oder dergleichen auf die Oberfläche des thermoplastischen Elastomers aufgebracht werden. Neben der Schutzwirkung des 2-Komponenten-Klarlacks kann dieser dadurch gleichzeitig auch Informationen auf der Elastomeroberfläche bereitstellen.

Der 2-Komponenten-Klarlack kann mittels eines Sprühverfahrens aufgebracht werden. Mittels einer Maskierung können bestimmte Bereiche der Elastomeroberfläche 50 von der Beschichtung ausgenommen werden, wie es auch in Fig. 2 ersichtlich ist, wo der linke Bereich der Oberfläche 50 des thermoplastischen Elastomers 40 keine Schutzschicht 10 aufweist. Die Maskierung kann auch dazu dienen, Oberflächen, welche nicht aus einem thermoplastischen Elastomer bestehen, von der Beschichtung auszunehmen. Dies ist insbesondere dann vorteilhaft, wenn das Auftragen des Schutzlackes 10 erst nach Anbringen des thermoplastischen Elastomers an das Gerät erfolgt bzw. erfolgen soll.

Bevorzugt wird der Schutzlack im Sprühverfahren, dem Spritz- oder Tauchverfahren aufgetragen. Alternativ wird der Schutzlack auch im Tampondruckverfahren, im Siebdruckverfahren oder im Flexodruckverfahren aufgebracht. Hierzu wird der Schutzlack bzw. der mit Farbpigmenten versehene Schutzlack vorzugsweise hochviskos ausgeführt. Damit ist es möglich einerseits den Schutzeffekt des Schutzlackes auf kleine Flächen, etwa elastische Schalterbereiche, selektiv zu beschränken, andererseits können beispielsweise zusätzlich noch Informationen und/oder Symbole und/oder individuelle Farbgebungen/Farbdekorationen auf die Oberfläche des thermoplastischen Elastomers 40 aufgebracht werden, wie beim Gerät (d) in Fig. 1 als "ABC" mit Bezugszeichen 20 gezeigt.

Die Informationen und/oder Symbole und/oder individuelle Farbgebungen/ Farbdekorationen können aber wahlweise auch als ein Aufdruck 60 oder als eine weitere Schutzschicht 70 auf die Schutzschicht 10 ausgeführt sein. Dazu ist der Schutzlack 10 als eine Druckfarbe ausgebildet, die mit einer entsprechenden Viskosität und mit entsprechenden Farbpigmenten versehen ist, wobei die Druckfarbe wahlweise neben dem Sprühverfahren auch im Tampondruckverfahren, im Siebdruckverfahren oder im Flexodruckverfahren aufgebracht werden kann.

Wahlweise kann man aber auch über die thermoplastische Oberfläche 50 hinaus eine entsprechende Schutzschicht 10 vorsehen, so dass im Extremfall die gesamte Oberfäche mit der Schutzschicht 10 versehen ist, was eine Maskierung überflüssig machen würde. Dies ist in der Fig. 2 gestrichelt mit der Bezugsziffer 90 schematisch angedeutet.

## Patentansprüche

1. Strukturbauteil mit wenigstens einem Handkontaktabschnitt, wie z. B. einen Griffabschnitt, welcher aus einem Elastomer ausgebildet ist, **dadurch gekennzeichnet, dass** eine Oberfläche des zum manuellen Aufgriff vorgesehenen Bauteilabschnitts oder des Kontaktabschnitts zumindest teilweise mit einer Schutzschicht aus einem Lack versehen ist, wobei der Lack direkt auf die Oberfläche des Kunststoffes aufgetragen ist.

2. Strukturbauteil nach Anspruch 1, **dadurch gekennzeichnet, dass** der Lack ein Mehrkomponentenklarlack, insbesondere ein 2-Komponenten-Klarlack auf Polyurethan-Basis ist.

3. Strukturbauteil nach Anspruch 2, **dadurch gekennzeichnet, dass** die erste Komponente des 2-Komponenten-Klarlacks aus der Gruppe umfassend hydroxylgruppenhaltiges Bindemittel ausgewählt ist und mit einem Härter als zweite Komponente vernetzt ist.

4. Strukturbauteil nach Anspruch 2 oder 3, **dadurch gekennzeichnet, dass** das Bindemittel ein Polyurethanharz, Polyester oder Polyacrylat aufweist.

5. Strukturbauteil nach einem der Ansprüche 2 bis 4, **dadurch gekennzeichnet, dass** der Härter auf Basis von Polyisocyanaten zu einem duroplastischen Polyurethan vernetzt ist.

6. Strukturbauteil nach einem der vorhergehenden Ansprüche, **dadurch gekennzeichnet, dass** die Dicke der Schutzschicht 10 bis 100 µm und insbesondere 20 bis 60 µm beträgt.

7. Strukturbauteil nach einem der vorhergehenden Ansprüche, **dadurch gekennzeichnet, dass** dieses als ein Produkt zur Körperpflege, insbesondere eine elektrische Zahnbürste, ein Zungenreiniger-Aufsatz, ein Rasierer oder ein elektrisches Rasiergerät oder ein sonstiges Mundpflegeprodukt ausgebildet ist..

8. Strukturbauteil nach einem der Ansprüche 1 bis 6, **dadurch gekennzeichnet, dass** dieses als eine Zahnbürste mit einem Zahnbürstenhals, einem Zahnbürstenkopf und einem Zahnbürstengriff ausgebildet ist, wobei die Oberfläche des Zahnbürstenhalses und/oder des Zahnbürstenkopfes und/oder des Zahnbürstengriffes zumindest einen Bereich aus einem Kunststoff aus der Gruppe der Elastomere aufweist, der mit der Lack-Schutzschicht versehen ist.

9. Verfahren zur Herstellung eines Körperpflegeproduktes, das im Mehrkomponentenspritzgießverfahren hergestellt wird, das einen Abschnitt mit einem thermoplastischen Elastomer aufweist, **dadurch gekennzeichnet, dass** der Elastomerabschnitt zumindest teilweise mit einem Schutzlack lackiert wird.

10. Verfahren nach Anspruch 9, **dadurch gekennzeichnet, dass** der Lack ein Mehrkomponentenklarlack, insbesondere ein 2-Komponenten-Klarlack auf Polyurethan-Basis ist, wobei die erste Komponente des Mehrkomponenten-Klarlacks aus der Gruppe umfassend hydroxylgruppenhaltiges Polyurethanharz, hydroxylgruppenhaltiges Polyester und Polyacrylat ausgewählt wird und als zweite Komponente mit einem Härter aus der Gruppe der Polyisocyanate zu einem duroplastischen Polyurethan vernetzt.

11. Verfahren nach einem der Ansprüche 9 bis 10, wobei das Auftragen der Schutzschicht im Sprüh-, Tauch- oder Spritzverfahren erfolgt.

12. Verfahren nach einem der Ansprüche 9 bis 11, wobei die nicht mit einer Schutzschicht zu versehenden Bereiche der Oberfläche des Bauteils mittels einer Maskierung von dem Auftragen der Schutzschicht ausgenommen werden.

13. Dispositionsmedium zur Beschichtung eines TPE-Bauteils umfassend eine Basis-Komponente, die aus der Gruppe umfassend hydroxylgruppenhaltiges Polyurethanharz, hydroxylgruppenhaltiges Polyester und Polyacrylat ausgewählt ist und eine HärterKomponente aus der Gruppe der Polyisocyanate, die als solche das Dispositionsmedium zu einem duroplastischen Polyurethan vernetzt.

14. Dispositionsmedium nach Anspruch 13, **gekennzeichnet durch** eines der Merkmale der Ansprüche 1 bis 8.
